# EUROPEAN PATENT APPLICATION

(11) **EP 4 439 295 A1**
(43) Date of publication of application: **02.10.2024**
(21) Application number: 23175814.5
(22) Date of filing: 26.05.2023
(51) Int. Cl.: G06F 9/50

(54) **METHOD, DEVICE AND SYSTEM OF DYNAMIC ALLOCATION OF BLOCKCHAIN RESOURCES**

(30) Priority: 29.03.2023 IN 202341023069
(71) Applicant: Hitachi Energy Switzerland AG, 5400 Baden (CH); Indian Institute of Technology Kharagpur, Kharagpur, West Bengal 721302 (IN)
(72) Inventor: TANDUR, Deepaknath, 560068 Bangalore (IN); SARKAR, Kounteya, 700099 West Bengal (IN); MISRA, Sudip, 721302 West Bengal (IN)
(74) Representative: Vossius & Partner Patentanwälte Rechtsanwälte mbB

(57) **Abstract**

The present disclosure relates to a method of dynamic allocation of blockchain resources. The method comprises providing blockchain resources, wherein the blockchain resources comprise a plurality of servers connected to at least one asset, dynamically determining a blockchain resource requirement of the at least one asset and dynamically allocating a first number of servers of the plurality of servers to a first subgroup of servers based on the blockchain resource requirement.

## Description

The present disclosure relates to a method, device and system of dynamic allocation of blockchain resources.

In situations where hundreds and thousands of loT (Internet-of-Things) assets are deployed in different fields across multiple customer sites, the current model of server-client architecture with centralised management of these asset can lead to a maintenance overhead. The devices will be heterogeneous in terms of hardware and software capability, and there may exist multiple third party devices providing limited access in their configuration and firmware upgrade.

Similarly, the smart grid of the future will consist of various entities, such as individual solar cell sites, wind farms, electric vehicle charging stations and even mobile electric vehicles. Each one of them is expected to generate a huge amount of data. Managing individual configuration settings and versions of the firmware/patches can be tedious under central management as the number of assets in the field increase. Also, as the number of loT devices increases, security becomes an important issue.

The present invention has been made in view of the above problems.

The present disclosure is specified by the independent claims. Preferred embodiments are defined in the dependent claims. In the following description, although numerous features may be designated as optional, it is nevertheless acknowledged that all features comprised in the independent claims are not to be read as optional.

The present disclosure relates to a method of dynamic allocation of blockchain resources. The method comprises providing blockchain resources, wherein the blockchain resources comprise a plurality of servers connected to at least one asset, dynamically determining a blockchain resource requirement of the at least one asset and dynamically allocating a first number of servers of the plurality of servers to a first subgroup of servers based on the blockchain resource requirement.

Various embodiments may preferably implement the following features.

Preferably, the blockchain resource requirement is dependent on at least one of a frequency of storage of at least one asset parameter, a frequency of change of the at least one asset parameter, a data amount of the at least one asset parameter, or the first number of servers.

Preferably, the at least one asset parameter includes at least one of a configuration, a location, a firmware, recording of operations/transactions, history of recordings of operations/transactions, or information derived from a blockchain of the at least one asset.

Preferably, the at least one asset is at least one of a solar cell, a capacitor bank, a wind turbines, an electric vehicle charging point, a smart house, an energy storage, a photovoltaic energy generation system, a smart meter, or an advanced metering infrastructure, wherein the at least one asset is preferably part of a smart grid.

Preferably, the dynamically allocating comprises increasing or decreasing the number of servers of the first subgroup of servers based on the blockchain resource requirement.

Preferably, the dynamically allocating comprises dynamically allocating and/or reallocating servers of the plurality of servers to/from the first subgroup of servers based on the blockchain resource requirement.

Preferably, the dynamically allocating comprises allocating at least a second number of servers to at least a second subgroup of servers and/or dynamically changing the number of subgroups of servers.

Preferably, decreasing the number of servers of the first subgroup of servers comprises allocating a number of the first subgroup of servers to a second subgroup of servers, wherein a first blockchain of the first subgroup of servers is continued as a first single linear blockchain.

Preferably, each of the first and second subgroup of servers is configured to be allocated to a different asset and a second blockchain of the second subgroup of servers is continued as a second single linear blockchain.

Preferably, increasing the number of servers of the first subgroup of servers comprises merging a second subgroup of servers to the first subgroup of servers. Preferably, merging of the first and second subgroup of servers comprises adding a second blockchain of the second subgroup of servers to a first blockchain of the first subgroup of servers in parallel as a new blockchain. Preferably, the new blockchain is continued as a single linear blockchain.

Preferably, the new blockchain comprises a plurality of blockchains of other subgroups of servers in parallel to the first subgroup of servers.

Preferably, the method further comprises storing a complete blockchain in at least one of the servers of each of the subgroup of servers, wherein preferably at least one of the servers of each of the subgroup of servers does not store the complete blockchain.

Preferably, the method further comprises storing metadata of the complete blockchain in the remaining servers of each of the subgroup of servers.

Preferably, the method further comprises storing a complete blockchain of the first subgroup of servers in an active set of each of the servers of the first subgroup of servers and storing a complete blockchain of other subgroups of servers in a passive set of each of the servers of the first subgroup of servers.

Preferably, the active set and passive set correspond to different storage spaces of a respective server.

Preferably, the method further comprises storing the complete blockchain of the first subgroup of servers in the active set of each server of the first subgroup of servers, and storing the complete blockchain of other subgroups of servers in the passive set of servers of the first subgroup of servers belonging to a leader set, and storing metadata of the blockchain of other subgroups of servers in the passive set of servers of the first subgroup of servers belonging to a working set.

Preferably, the leader set and the working set each comprise at least one server of the first subgroup of servers.

Preferably, the method described herein with reference to the first subgroup of servers is likewise executed for each subgroup of servers. That is, each subgroup of servers preferably comprises a leader set and a working set and each server of each subgroup of server comprises an active set and a passive set as outlined above.

Preferably, the method is executed by at least one of the plurality of servers or by a separate processing unit.

The present disclosure further relates to a device for blockchain resource allocation, wherein the device is connected to a plurality of servers connected to at least one asset and wherein the device comprises a processor configured to dynamically determine a blockchain resource requirement of the at least one asset, and dynamically allocate a first number of servers of the plurality of servers to a first subgroup of servers based on the blockchain resource requirement.

Various embodiments may preferably implement the following features.

Preferably, the processor is configured to determine the blockchain resource requirement based on at least one of a frequency of storage of at least one asset parameter, a frequency of change of the at least one asset parameter, a data amount of the at least one asset parameter, or the first number of servers.

Preferably, the at least one asset parameter includes at least one of a configuration, a location, a firmware, recording of operations/transactions, history of recordings of operations/transactions, or information derived from a blockchain of the at least one asset.

Preferably, the processor is configured to increase or decrease the number of servers of the first subgroup of servers based on the blockchain resource requirement.

Preferably, the processor is configured to dynamically allocate and/or reallocate servers of the plurality of servers to/from the first subgroup of servers based on the blockchain resource requirement.

Preferably, the processor is configured to allocate at least a second number of servers to at least a second subgroup of servers and/or to dynamically change the number of subgroups of servers.

Preferably, the processor is configured to allocate a number of the first subgroup of servers to a second subgroup of servers, wherein a first blockchain of the first subgroup of servers is continued as a first single linear blockchain. Preferably, each of the first and second subgroup of servers is configured to be allocated to a different asset and a second blockchain of the second subgroup of servers is continued as a second single linear blockchain.

Preferably, the processor is configured to merge a second subgroup of servers to the first subgroup of servers, wherein merging of the first and second subgroup of servers preferably comprises adding a second blockchain of the second subgroup of servers to a first blockchain of the first subgroup of servers in parallel as a new blockchain. Preferably, the processor is configured to continue the new blockchain as a single linear blockchain.

Preferably, the new blockchain comprises a plurality of blockchains of other subgroups of servers in parallel to the first subgroup of servers.

Preferably, the processor is configured to store a complete blockchain in at least one of the servers of each of the subgroup of servers, wherein preferably at least one of the servers of each of the subgroup of servers does not store the complete blockchain.

Preferably, the processor is configured to store metadata of the complete blockchain in the remaining servers of each of the subgroup of servers.

Preferably, the processor is configured to store a complete blockchain of the first subgroup of servers in an active set of each of the servers of the first subgroup of servers and to store a complete blockchain of other subgroups of servers in a passive set of each of the servers of the first subgroup of servers.

Preferably, the active set and passive set correspond to different storage spaces of a respective server.

Preferably, the processor is further configured to store the complete blockchain of the first subgroup of servers in the active set of each server of the first subgroup of servers, and to store the complete blockchain of other subgroups of servers in the passive set of servers of the first subgroup of servers belonging to a leader set, and to store metadata of the blockchain of other subgroups of servers in the passive set of servers of the first group of servers belonging to a working set.

Preferably, the leader set and the working set each comprise at least one server of the first subgroup of servers.

Preferably, the processor described herein with reference to the first subgroup of servers is likewise configured to execute the above for each subgroup of servers. That is, each subgroup of servers preferably comprises a leader set and a working set and each server of each subgroup of server comprises an active set and a passive set as outlined above.

Preferably, the device is a part of the plurality of servers.

Preferably, the device is a processing unit separate from the plurality of servers.

The present disclosure further relates to a system for blockchain resource allocation. The system comprises a plurality of servers, at least one asset connected to the plurality of servers and a device as described above connected to the plurality of servers.

Preferably, the at least one asset is at least one of a solar cell, a capacitor bank, a wind turbines, an electric vehicle charging point, a smart house, an energy storage, or a photovoltaic energy generation system, wherein the at least one asset is preferably part of a smart grid.

To provide better security and future accountability of transactions and the management of these assets, the configuration programs needed for management and recording of the transaction may be put into a blockchain framework. The smart grid entities themselves can be a part of the miner set having sufficient storage and computing capabilities. The advantage of blockchain technology is well known in terms of ensuring security and authenticity by managing a distributed ledger. Smart contracts feature available in blockchain can be utilised for the management of these assets [2-4]. However, they come with an enormous energy cost as the number of transactions continuously increase in the network [1]. As electricity infrastructure is generally spread over a large geographical area, with some regions reporting very less transaction rate, whereas a dense locality reporting huge transactions and much more management requirement. Having one general blockchain network with a single uniform miner set for the entire infrastructure is not an optimal feature. According to the prior art, any transaction or smart contract originating from any location must wait in a single queue for it to be verified by all miners and put into blockchain. This may induce additional latency for time-critical use-cases. Additionally, as the grid devices can themselves be abstracted as miners, it does not make sense for a solar site present at a remote location to receive and verify transactions of a faraway city. Thus, while blockchain is a powerful framework for secure storage and accountability, a static single miner set over a heterogenous smart grid infrastructure possess several issues.

Thus, the present disclosure proposes a blockchain frameworkthat enables fleet management of assets in a smart grid infrastructure by dynamically resizing and allocating resources based on the asset management demand. Fleet management could include configuration or firmware management of assets, recording of financial or other transactions. The present disclosure proposes a blockchain framework that dynamically resizes in accordance with demand of smart grid management of assets. For example: A certain section of assets may require frequent configuration updates and these set of assets can have a separate blockchain network from the rest of the set of assets. As the assets spread across geographical areas, they are continuously added into the location specific blockchain network. Each blockchain network consists of a set of miners that get further divided or merged into various blockchain network sizes called clusters. Each cluster then acts as a local miner pool. The present disclosure proposes a method, device and system to manage this dynamic resizing of the network. It also maintains a correlation amongst the different active clusters. The method ensures that clusters are always up to date with the latest blockchain and there is thus no loss of data. Blockchain technology helps eliminating the need to centrally manage individual asset, thus helping to reduce the overhead often associated in a centrally managed fleet.

The present disclosure will be further described with reference to the figures. Therein,
Fig. 1A shows division processes according to an embodiment of the present disclosure,
Fig. 1B shows union processes according to an embodiment of the present disclosure,
Fig. 2 shows an allocation/reallocation process according to an embodiment of the present disclosure,
Figs. 3A and 3B show exchange of blockchain data between servers according to an embodiment of the present disclosure,
Figs. 4A and 4B show exemplary overviews of a system according to an embodiment of the present disclosure,
Fig. 5 is a further schematic depiction of the system according to an embodiment of the present disclosure, and
Fig. 6 is a flow chart of a method according to an embodiment of the present disclosure.

The present disclosure proposes a blockchain framework that dynamically resizes, i.e., allocates or reallocates servers in a blockchain, in accordance with a demand of a smart grid management of assets. For example: A certain section of assets may require frequent configuration updates and these set of assets can have a separate blockchain network from the rest of the set of assets for the same customer's installation base. As mentioned above, the blockchain framework can use smart contracts to control and configure loT devices [2-4]. A smart contract may be a computer program, or in other words an agreement with predefined business rules, that is run by nodes in the blockchain for automation. Smart contracts are being used increasingly for management of assets in loT environments.

The present disclosure proposes a blockchain framework for a smart grid that supports the presence of several blockchain networks or miner pool clusters, i.e., a group of servers, instead of a large single cluster.

In the following, the terms server and miner, (sub)group and cluster as well as (re)allocating and resizing may each be used interchangeably. A transaction may herein refer to any exchange of data such as the transmission or reception of assets parameters, a configuration, a location, a firmware, recording of operations, payment information, blockchain information or a history of the previously mentioned data.

Each group or subgroup (cluster) may consist of servers (miners) that are associated to a certain geographical region and are tasked with verifying the transactions (asset parameters, smart contracts, data, etc.) originating from within that region only. The size of the group and the number of servers within that group is kept commensurate with the demand that meets the quality of service required in that region. The method, device and system proposed herein supports dynamic resizing of the groups of servers depending on demand situations.

In other words, the number of servers in a group or subgroup can be dynamically adapted by allocating or reallocating servers to particular groups or subgroups.

Through this division of a group of servers (cluster) into, e.g., two smaller subgroups of servers (clusters), each of them may now act as independent servers (miners) for their own respective region so that the individual smaller regions can now be better served by a smaller group. Similarly, multiple subgroups (clusters) can also be merged together to form a bigger group/subgroup (cluster) as per the situation.

A central coordinator (for example a control device, a grid master administrator or one of the servers) may continuously monitor the network parameters such as real-time transaction count and demand, and may then take the decision to divide or merge the groups. Each group may only be concerned with mining the blocks and maintaining the blockchain of its local transactions. However, each currently active group of servers may have access to the full blockchain of its region after every division or union event, hence each miner of the framework may follow a unique blockchain storage mechanism and an inter-group correlation that ensures consistency even after multiple union and division event. This dynamic approach enables the network to adjust itself in real-time to provide a fair and uniform computational resource and waiting latency for every transaction, depending on its rate and location.

Herein, the term "blockchain resources" may relate to computing resources such as computing power, storage space, network bandwidth, network stability and the like used for storing a blockchain.

A "blockchain resource requirement" as used herein may relate to a minimum computing power, storage space, network bandwidth, network stability and the like required for storing data from an asset in a blockchain. In other words, the required blockchain resources on the server side may be determined based on the blockchain resource requirements on the asset side. For example, an asset generating large amounts of data may have a larger blockchain resource requirement for storing said data in a blockchain than an asset only sporadically generating data.

"Allocation" generally refers to the assignment of resources. In particular, allocation may refer to assigning resources, such as the blockchain resources recited above, to a particular asset or set of data.

The term "dynamically" as used herein may refer to a determination of the allocated/assigned resources according to a current need, demand, or requirements. That is, a particular server or set of servers is/are not statically allocated to one or more assets, but the allocated server(s) change according to a current resource requirement of the asset.

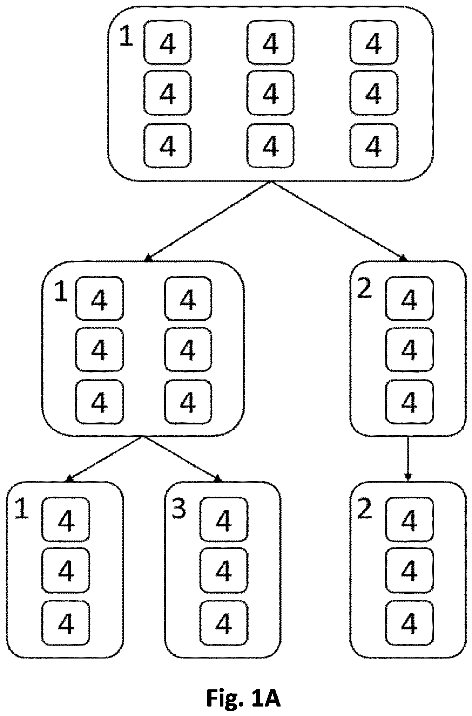

Fig. 1A shows division of a group of servers according to an embodiment. In particular, Fig. 1A shows a plurality of servers 4 which are grouped. The plurality of servers 4 provide blockchain resources. That is, the plurality of servers 4 may store a blockchain. At least one asset 5 (not shown) is connected to the plurality of servers 4.

In this example, nine servers 4 initially form a group of servers 1. A blockchain resource requirement of the asset 5 connected to the plurality of servers 4 is dynamically determined. Depending on said blockchain resource requirement, the number of servers 4 may dynamically be allocated or reallocated to subgroups of servers 1, 2, 3.

In Fig. 1A, a first allocation or division event is indicated by the arrows. Here, three servers 4 of the plurality of servers 4 are allocated to a second subgroup of servers 2 while six servers 4 of the plurality of servers 4 form the first subgroup of servers 1. After a second allocation or division event, the first subgroup of servers 1 is again subdivided into the first subgroup of servers 1 and a third subgroup of servers 3, each consisting of three servers 4. The second subgroup of servers 2 is preserved. Thus, the number of servers 4 in a subgroup 1, 2, 3 can be dynamically adapted according to the current blockchain resource requirement of a respective asset 5.

Said blockchain resource requirement may be dependent on at least one of a frequency of storage of at least one asset parameter, a frequency of change of the at least one asset parameter, a data amount of the at least one asset parameter, or a number of servers 4 in a subgroup 1, 2, 3. The at least one asset parameter may include at least one of a configuration, a location, a firmware, recording of operations/transactions, history of recordings of operations/transactions, or information derived from a blockchain of the at least one asset 5.

The at least one asset 5 may be at least one of a solar cell, a capacitor bank, a wind turbines, an electric vehicle charging point, a smart house, an energy storage, a photovoltaic energy generation system, a smart meter, or an advanced metering infrastructure, wherein the at least one asset 5 is preferably part of a smart grid.

The above-described dynamic allocation may not only comprise reducing the number of servers 4 in a subgroup of servers 1, 2, 3, but also increasing the number of servers 4 in a subgroup of servers 1, 2, 3. This may also encompass terminating or combining certain subgroups of servers 1, 2, 3.

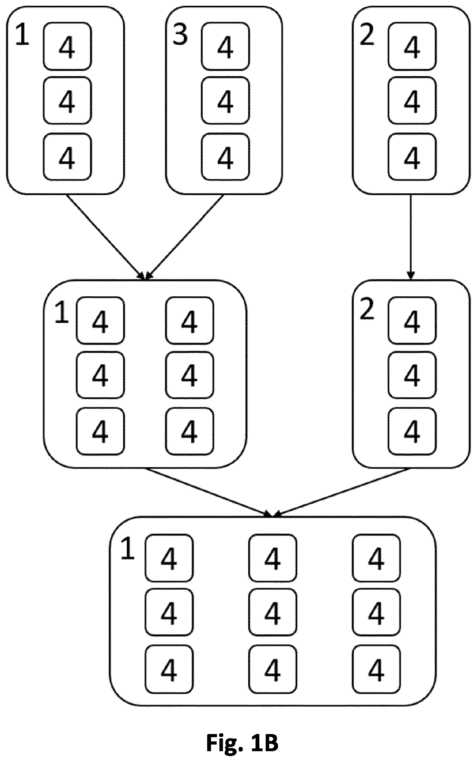

In Fig. 1B, such union events in reverse order of Fig. 1A are shown. In this example, three subgroups of servers 1, 2, 3 comprising three servers 4 each are initially provided. According to a dynamically determined blockchain resource requirement of the at least one asset 5 (not shown), the first subgroup of servers 1 and the third subgroup of servers 3 are combined such that the respective servers 4 are allocated to the first subgroup of servers 1. The second subgroup of servers 2 remains unchanged at that point in time. After a further union event indicated by the arrows, the first and second subgroup of servers 1, 2 are combined to form a single group of servers 1.

The number of servers 4 is not limited to the examples provided herein. Moreover, depending on the demand and number of assets 5 connected to the servers 4 and the resulting blockchain resource requirements, additional servers 4 may be added to the total number of servers 4. Equally, the total number of servers 4 may be reduced depending on the required resources.

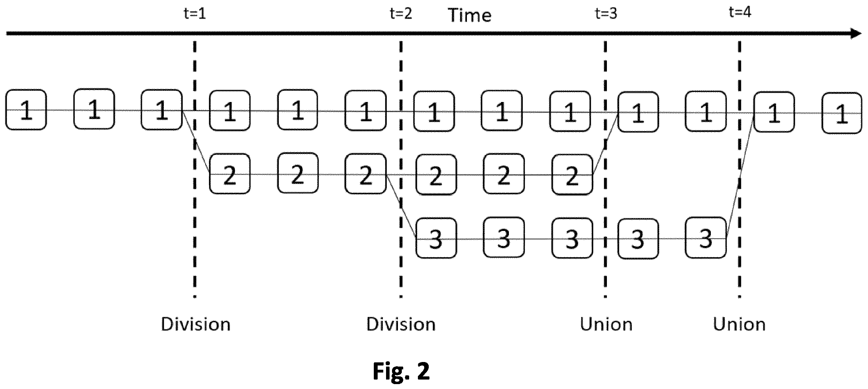

Fig. 2 is a depiction of division and union events as also shown in Figs. 1A and 1B. The blockchain which is stored in the servers 4 is indicated by a black line. Each box indicates a blockchain storage event in the respective subgroup of servers 1, 2, 3. The arrow indicates the time, wherein events are marked by dotted lines and time marks.

Initially, the blockchain consists of a single linear blockchain stored in the first subgroup of servers 1. At t = 1, a first division event as described with reference to Fig. 1A occurs and a number of servers 4 is allocated to a second subgroup of servers 2. The blockchain is branched into the first subgroup of servers 1 and the second subgroup of servers 2 and parallelly continued. In otherwords, decreasing the number of servers 4 of the first subgroup of servers 1 comprises allocating a number of the first subgroup of servers 1 to the second subgroup of servers 2, wherein a first blockchain of the first subgroup of servers 1 is continued as a first single linear blockchain. Each of the first and second subgroup of servers 1,2 may be configured to be allocated to a different asset 5 (not shown) and a second blockchain of the second subgroup of servers 2 may be continued as a second single linear blockchain.

At t = 2, a second division event occurs and a number of servers 4 is allocated to a third subgroup of servers 3, wherein the blockchain of the second subgroup of servers 2 is branched into two parallel blockchains. Thus, the blockchain is continued as three parallel blockchain threads.

At t = 3, a first union event as described with reference to Fig. 1B occurs and the first subgroup of servers 1 and the second subgroup of servers 2 are merged to the first subgroup of servers 1, that is, the servers 4 of the second subgroup of servers 2 are allocated to the first subgroup of servers 1. The blockchain, which previously consisted of parallel blockchains of the first and second subgroup of servers, is now continued as a single linear blockchain. In other words, the history of the blockchain of the second subgroup of servers 2 is appended to the blockchain of the first subgroup of servers 1 in parallel. Thus, increasing the number of servers 4 of the first subgroup of servers 1 comprises merging the second subgroup of servers 2 to the first subgroup of servers 1, wherein merging of the first and second subgroup of servers 1, 2 comprises adding the second blockchain of the second subgroup of servers 2 to the first blockchain of the first subgroup of servers 1 in parallel as a new blockchain. Said new blockchain is continued as a single linear blockchain.

At t = 4, another union event occurs and the servers 4 of the third subgroup of servers 3 are allocated to the first subgroup of servers 1. The process is as described above.

When the history of the blockchain after t = 4 is examined, the blockchain comprises a plurality of blockchains of other subgroups of servers 2, 3 in parallel to the first subgroup of servers 1.

In order to reduce the computational complexity while maintaining access to the blockchain to all servers 4 of the respective subgroup of servers 1, 2, 3, the complete blockchain may be saved in at least one the servers 4 of each of the subgroup of servers 1, 2, 3 and at least one of the servers 4 of each of the subgroup of servers 1, 2, 3 may not store the complete blockchain. Not storing the complete blockchain may indicate that only metadata of the blockchain is saved.

In an embodiment, the complete blockchain of the own subgroup of servers 1, 2, 3 may be stored while not the complete blockchain may be stored for other subgroup(s) of servers 1, 2, 3. In an embodiment, a complete blockchain of the first subgroup of servers 1 is stored in an active set of each of the servers 4 of the first subgroup of servers 1 and a complete blockchain of other subgroups of servers 2, 3 is stored in a passive set of each of the servers 4 of the first subgroup of servers 1. In an embodiment, the active set and passive set correspond to different storage spaces of a respective server 4.

In an embodiment, the complete blockchain of the first subgroup of servers 1 is stored in the active set of each server 4 of the first subgroup of servers 1, and the complete blockchain of other subgroups of servers 2, 3 is stored in the passive set of servers 4 of the first subgroup of servers 1 belonging to a leader set 41. Metadata of the blockchain of other subgroups of servers 2, 3 is stored in the passive set of servers 4 of the first subgroup of servers 1 belonging to a working set 42.

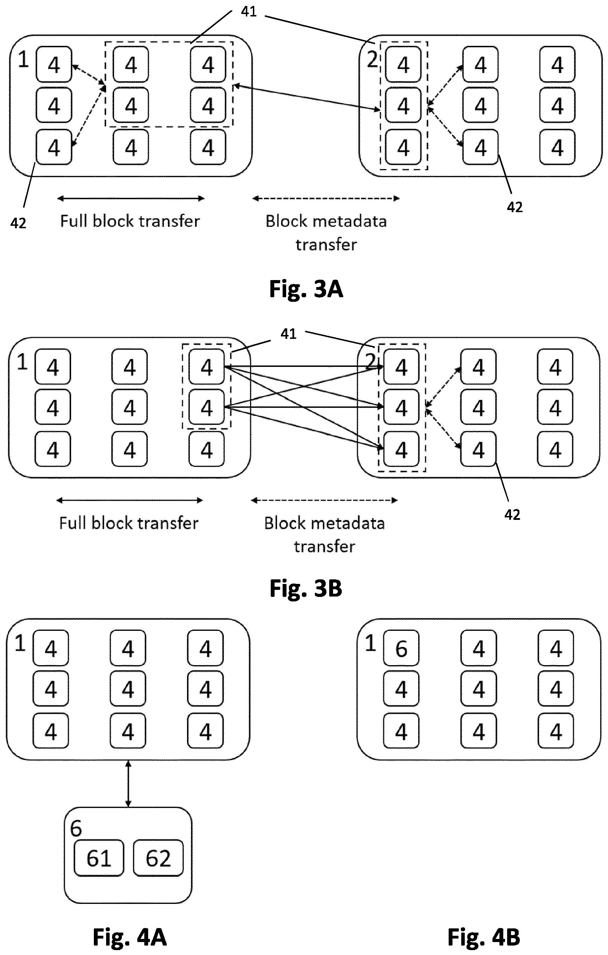

As indicated above, each subgroup of servers 1, 2, 3 may thus be subdivided into a leader set 41 of servers 4 and a working set 42 of servers 4 described in more detail below with reference to Figs. 3A and 3B. At least one server 4 of each subgroup of servers 1, 2, 3 belongs to the leader set 41. Consequently, at least one server 4 of each subgroup of servers 1, 2, 3 (or the remaining servers, respectively) may belong to the working set 42. However, certain subgroups of servers 1, 2, 3 may only consist of a leader set 41.

Each server 4 may further comprise an active and a passive set.

In Fig. 3A, the leader sets 41 of the first subgroup of servers 1 and second subgroup of servers 2 are indicated by a dashed-line box. The remaining servers 4 belong to the respective working sets 42 of the first subgroup of servers 1 and the second subgroup of servers 2. As indicated above, each server 4 of the leader set 41 and the working set 42 comprises an active set and a passive set. The active set and passive set may be two separate storage spaces of the same server 4.

The continuous arrow indicates that full blocks of a blockchain are transmitted while the dashed arrows indicate that only metadata of the blockchain is transmitted (see respective legend in the figures). In particular, the continuous arrow indicates the communication (data exchange) between the first subgroup of servers 1 and the second subgroup of servers 2 (clusters).

The leader sets 41 exchange the complete blockchain and consequently store the complete blockchain of the other subgroup(s). The active set of each server 4 of the leader set 41 of the subgroup of servers 1, 2 stores a complete blockchain of the own subgroup while the passive set of each server 4 of the leader set 41 of the respective subgroup of servers 1, 2 stores a complete blockchain of the other subgroup(s). Each server 4 of the working sets 42 on the other hand stores a complete blockchain of the own subgroup 1, 2 in the active set and metadata of the blockchain of the other subgroup(s) in the passive set.

Fig. 3B shows a (blockchain) data transfer from the leader set 41 of the first subgroup of servers 1 to the leader set 41 of the second subgroup of servers 2. The data from the first subgroup of servers 1 is then further distributed in the second subgroup of servers 2 to the working set 42 as metadata only. As indicated by the legend, the continuous arrow indicates that full blocks of a blockchain are transmitted while the dashed arrows indicate that only metadata of the blockchain is transmitted. For reasons of lucidity, not all data exchanges, particularly between the leader set 41 and the working set 42, have been indicated by arrows in Figs. 3A and 3B.

Table 1 below gives a further overview of the classification of servers 4. As shown in table 1, each server 4 may belong to a leader set 41 or a working set 42 and may comprise an active set and a passive set. Depending on the server 4 forming part of the leader set 41 or the working set 42, the own blockchain and the blockchain of other subgroups is fully stored or stored as metadata only.

**Table 1**

| **Server 4** | | | |
|---|---|---|---|
| **Leader set 41** | | **Working set 42** | |
| Active set | Passive set | Active set | Passive set |
| Full blockchain of own subgroup | Full blockchain of other subgroup(s) | Full blockchain of own subgroup | Metadata of blockchain of other subgroup(s) |

In Figs. 3A and 3B, two subgroups of severs 1, 2 are shown but the principle remains the same for any given number of subgroups of servers.

By storing the metadata of other subgroups of servers 1, 2, 3 in the passive sets (fully or as metadata only), the division events of subgroups 1, 2, 3, e.g., the integration of servers 4 of a certain subgroup 1, 2, 3 to another subgroup 1, 2, 3, will be facilitated since the blockchain data of the subgroup 1, 2, 3 to be integrated is already present in the passive sets of all other subgroups 1, 2, 3.

Table 2 below is a further graphic depiction of the division events over time as exemplarily also shown in Fig. 1A. Initially, one subgroup of servers 1 exists and the full blockchain is stored in the active set of each server 4 of the first subgroup of servers 1 and no data is stored in the passive set of each server 4 of the first subgroup of servers 1 (Active: {1}, Passive: {}).

At t = 2, the first division event into a first subgroup of servers 1 and a second subgroup of servers 2 occurs according to the blockchain resource requirement of the connected asset(s) 5. Thus, the first subgroup of servers 1 stores the own blockchain in the active set and the blockchain of the second subgroup of servers 2 in the passive set (Active: {1}, Passive: {2}). The second subgroup of servers 2 stores the own blockchain in the active set and the blockchain of the first subgroup of servers 1 in the passive set (Active {2}, Passive: {1}). After a further division event of the first subgroup of servers 1 into the first subgroup of servers 1 and a third subgroup of servers 3, the data distribution of the subgroups 1, 2, 3 is as shown under t = 3 (Active: {1}, Passive: {2, 3}; Active: {3}, Passive: {1, 2}; Active: {2}, Passive: {1, 3}).

As described above, each server 4 of the leader sets 41 of the respective subgroups 1, 2, 3 stores the full blockchain of all subgroups 1, 2, 3 while each server 4 of the working sets 42 of the respective subgroups 1, 2, 3 stores the full blockchain of the own subgroup 1, 2, 3 and only metadata of the other subgroups 1, 2, 3.

**Table 2**

| **Time** | **Blockchain** | | |
|---|---|---|---|
| t=1 | **Subgroup 1** | | |
| | Active: {1}, Passive: {} | | |
| t=2 | **Subgroup 1** | | **Subgroup 2** |
| | Active: {1}, Passive: {2} | | Active {2}, Passive: {1} |
| t=3 | **Subgroup 1** | **Subgroup 3** | **Subgroup 2** |
| | Active: {1}, Passive: {2, 3} | Active: {3}, Passive: {1, 2} | Active: {2}, Passive: {1, 3} |

The method and steps as described above may be performed by a device 6. The device may comprise a processor 61. The device may further comprise a memory 62. Moreover, the device may be provided external to the servers 4 and connected to the servers 4 and/or the asset 5 or may itself form part of a server 4 or be a server 4. The processor may be configured to perform the steps described herein.

Figs. 4A and 4B are schematic depictions of a system according to the present disclosure. According to Fig. 4A, a device 6 as described above is connected to at least one server 4 of the subgroup of servers 1. In Fig. 4B, the device 6 itself is one of the servers 4 of the subgroup of servers 1.

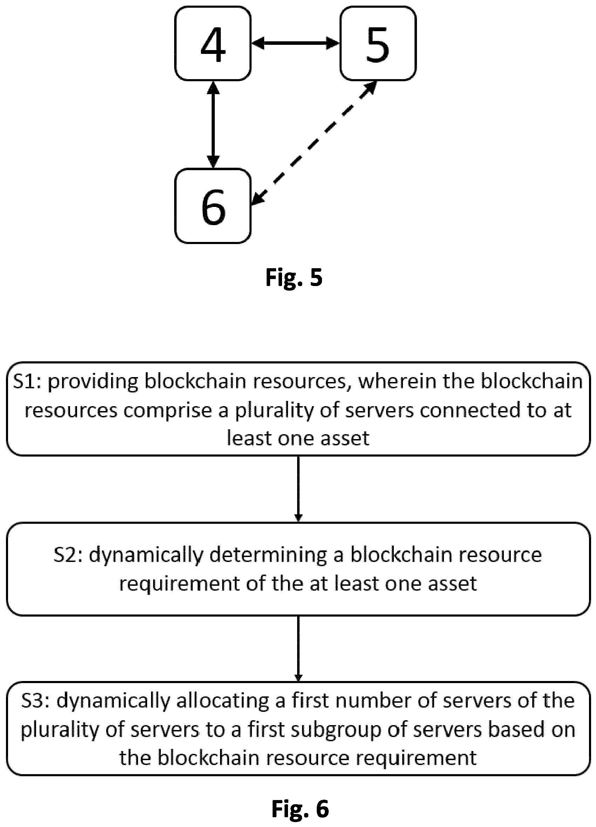

The above is also shown in Fig. 5, in which at least one server 4 is connected to at least one asset 5 and a device 6 is connected to at least one of the at least one servers 4. The device 6 may further be connected to the at least one asset 5 as indicated by the dashed arrow.

Fig. 6 is a flowchart of a method according to an embodiment of the present disclosure. The method comprises providing S1 blockchain resources, wherein the blockchain resources comprise a plurality of servers 4 connected to at least one asset 5, dynamically determining S2 a blockchain resource requirement of the at least one asset 5 and dynamically allocating S3 a first number of servers 4 of the plurality of servers 4 to a first subgroup of servers 1 based on the blockchain resource requirement.

The description below will give further details relating to embodiments of the present disclosure. Unless indicated otherwise, the below features are fully compatible with the above description. The terms server 4/miner 4, subgroup of servers 1, 2, 3/cluster 1, 2, 3, (re)allocating/resizing, asset/entity (device), and asset parameter/transaction may each be used synonymously as evident from the below context.

The present disclosure proposes to design a dynamic blockchain architecture for management, verification and several other tasks related to the functioning of a smart grid framework.

The smart grid framework may consist of several assets (entities) such as loT (Internet of Things) based smart grid devices (solar cells, capacitor banks, wind turbines, electric vehicle charging points, smart houses as prosumers etc) and participants (stakeholders) such as the energy service providers, consumers, government, management etc.

Each of the smart devices may have some mechanism (for example an onboard PLC, programmable logic controller) through which it can be connected to a communication network like the internet. The mechanism allows the devices to send various internal information such as current device status, current-voltage specifications, amount of charge stored, last transaction carried out among others to some remote location. Similarly, in the opposite direction, the devices can be instructed and programmed from a remote location to modify its status, condition and/or behaviour.

From the participant's perspective, different participants have different interests in joining the system. The producers are the owners of the smart grid devices that can produce electricity and push it onto the grid (for example owners of a solar firm). The consumers are the ones who consume the electricity (for example households and electric vehicle owners). Intermediary service providers can own certain infrastructure that sits in between the producer-consumer chain and helps in bi-directional flow of electricity, from the grid to consumers and vice-versa. An example of intermediary service providers is organisations that own and deploy electric vehicle charging stations. The charging stations can help in either charging an electric vehicle (current flow is from the grid towards end-users) or discharging the vehicle (current flow is from the end-users towards the grid, thereby providing bi-directional electricity flow) during peak grid loads. The government can be another participant that keeps an overall watch over all other entities. Each of the participants can operate within a certain framework of rules and regulations suited only for them.

In order to have an automatic yet highly secure and authentic scheme for the management of such a smart grid architecture, especially distributed over large geographical areas, it is proposed to have a dynamic blockchain framework as outlined above that aims to securely store, authenticate and validate all transactions that happen across the grid and its several participants.

By design, blockchain provides a highly secure distributed database for storing transaction details that are immutable, easily verifiable and auditable. Due to its inherent versatility and security, blockchain is finding application in every modern design scheme. In any blockchain deployment, a distributed group of computing cum storage nodes known as miners (servers 4) are defined whose task is to distributively verify each transaction, arrive at a mutual consensus (there are several consensus schemes like PoW, PoS PoA etc), generate a new block and add the block to the blockchain. Each miner has its own local copy of blockchain and the exact same copy of the blockchain exists across all the miners (this is how miners ensure mutual consensus).

The size of the miner set (subgroup 1, 2, 3) may be a limiting factor, however, in the responsiveness and latency factors in a blockchain. The time it takes to verify each transaction, and to add the transaction to the blockchain is directly proportional to the miner set size. For real-time and latency sensitive applications (such as our smart grid) this may be disadvantageous. At the same time, having too small a miner set size may not ensure potential security since a strong network attack can overcome all the miners. It is in this light that the present disclosure finds the motivation to propose the dynamic blockchain for smart grids, whereby the overall blockchain miner set is divided into smaller miner clusters and the size of each miner cluster (subgroup 1, 2, 3) may be dynamically modified via two processes, namely union and division as described above and chosen according to the latest network condition such as latest transaction count, transaction density and congestion. This ensures a fair and equitable distribution of miner computing power according to, e.g., the current geographical distribution of network congestion and transaction count, so that no transaction would take more time to get verified (problem with a very large miner set) or will be verified with too small a miner set. In fact, for each transaction, the present disclosure may ensure that the size of the miner set that verifies the transaction is commensurate with the current transaction count and location-based density.

Apart from ensuring dynamic miner set-size (size of the subgroups 1, 2, 3), the proposed method may also employ a unique storage allocation mechanism for blockchains across miner clusters (subgroups 1, 2, 3) through cross-cluster correlation and data exchange so that as the miner cluster sizes increase or decrease through the dynamic behaviour, the newly resized cluster do not need to spend any additional latency for blockchain transfer across clusters. As explained above, this may be achieved, inter alia, by the classification of servers 4 (miners) of each subgroup of servers 1, 2, 3 (clusters, miner sets) into a leader set 41 and a working set 42 as well as the division of each server 4 into an active set and a passive set.

The following will give again an overview of the proposed method:
According to an embodiment, the following two-tiered structure of the entire blockchain framework may be used.
1. **User/Participant blockchain:** This refers to the blockchain and its associated miner set that stores, verifies and authenticates transactions from the perspective of users/participants. For example, for a user who is, e.g., an electric vehicle owner, this blockchain stores the account and transaction details of all the times that the user has interacted with the smart grid, say to charge his/her vehicle. Since human users are mobile and they are not fixated on any specific geographic location, the user/participant blockchain may be of a standard fixed size without dynamic resizing.
2. **Infrastructure blockchain:** This is the blockchain network that is associated to the individual smart grid entities for their management. As smart grid entities are physical devices with network connectivity and confined to a geographical location, the infrastructure blockchain is proposed to have a dynamic nature where every physical entity is associated with a miner set, the size of which is commensurate with the current activity of other entities in the geographic vicinity. For example, consider two regions, region A having 'm' number of entity nodes with activity rate r_{A} and region B having 'n' number of nodes and activity rate r_{B}(n > m and r_{B} > r_{A}). The activity rate may be defined as the number of transactions the entity has to handle per unit time (as defined). Then, instead of having one large miner pool (miner pool is the same as miner set) for both the regions A and B, region A is associated with miner pool M_{A} while region B is associated with miner pool M_{B} and the size of the former is less than that of the latter. This ensures that for all transactions originating in A, M_{A} verifies them and similarly for region B. By making the miner pool size commensurate with the activity rate of the regions, it is ensured that every transaction originating from region A (which has a low activity rate, hence lower probability of being compromised) need not be verified by miners of region B which would also induce extra latency. If, however, the activity rate of A should increase beyond a certain threshold (indicating that region A is now more prone to attack, hence requiring more security), the miner pool M_{A} can be increased dynamically to handle the situation. Both M_{A} and M_{B} may have a minimum set size that provides sufficient security.

The dynamic behaviour according to an embodiment may be described as follows:
The following three functionalities may be supported by the proposed dynamic blockchain resource allocation. These may all pertain to the infrastructure blockchain.
1. **Division/De-merging** of miner pool clusters (subgroups 1, 2, 3) - This refers to the process whereby the existing miner pools, which, e.g., may each be associated with a geographic region, may be divided into smaller pools depending on the current activity rate of the existing pool. For example, if M_{A} initially holds for region A and if the activity rate of region A reduces significantly, it is no longer required for M_{A} to still verify the fewer number of transactions of region A by a subgroup/cluster of the previous size. Thus, A may be divided into two regions, A¹ and A² with associated miner pools M_{A}¹ and M_{A}² (first and second subgroups 1, 2). Initially, the entire region may be allotted with a single miner pool, and then, depending on the activity rate, the miner pool may be divided and subdivided into smaller pools to suit the situation.
2. **Union/Merging** of miner pool clusters - This describes the opposite of the division process whereby existing small miner pool clusters (subgroups 1, 2, 3) are merged together into a larger cluster to suit the current requirements. For example, considering the example given above, A¹ and A² are two regions with two miner pool clusters M_{A}¹ and M_{A}². Now, supposed that the activity rate of A¹ goes up significantly denoting that A¹ requires a bigger miner pool (i.e., a greater number of validators (servers 4, miners)) to validate its transactions, the miner pool clusters M_{A}¹ and M_{A}² may be merged together to M_{A} representing the union of the two regions A¹ and A² to A. In this process, the final state after several merging may be the condition where the entire location is just one miner pool.
3. **Correlation:** In order for the division and union process to proceed smoothly and provide the dynamic blockchain miner pool, there may be some correlation between the various clusters (subgroups 1, 2, 3), preferably at all times. Note that through the process of union and division, every individual miner computing node (server 4) may get associated to a miner pool of varying size continuously. However, irrespective of the pool size, the individual nodes may still act as fully functional miners within their immediately assigned pool and require the complete blockchain data to verify transactions of that pool. This may put a requirement on every server 4 (miner node) that it must have the complete blockchain (with every recorded transaction since beginning) corresponding to the pool that it is currently assigned. By extension of this fact, all the miner nodes in any cluster pool should hold the complete blockchain for all smart grid infrastructure devices of that pool. Since the entire region may start from a single pool and may get dynamically resized through union and division, there may be no fixed assignment of individual miner nodes to pool clusters, and thereby every miner node may be expected to have the full copy of the blockchain of the pool to which it is currently assigned.

Therefore, the above described unique storage management scheme for blockchain database to be followed across miners based on the dynamic union and division may be employed. Through this storage scheme, individual miners may allocate their blockchain storage mechanism dynamically to keep up with the dynamic resizing of the miner pool consistently. This may be done via a message passing scheme (i.e., a correlation) among all the different miner clusters currently present in the architecture. The correlation that has already been described above may, in one embodiment, thus be performed as follows:
1. Every miner computing node, i.e., server 4, (irrespective of their currently assigned cluster) may keep two sets of storage spaces with them, an active set and a passive set.
2. Corresponding to every miner cluster pool (subgroup 1, 2, 3), there may be a set of a certain number of miners known as the leader set 41 and the remaining miners within that pool may act as the working set 42. The miners 4 of both the leader set 41 and working set 42 are fully functional miners 4 for their assigned pool, but they differ in their management of the active and passive set.
3. The active set represents the set where the blockchain of the current miner pool (subgroup 1, 2, 3), to which this particular miner (server 4) has been assigned to, will be stored. Said miner is tasked with verifying the transactions originating only from within its currently assigned cluster, i.e., the transactions originating from the physical devices (asset(s) 5) covered by this pool (along with other miners who also belong to the same pool). Once verified, the transaction details are added to the blockchain of this active set. In other words, the active set denotes the current working set of blockchain storage for every miner. Both the leader and the working set miners of a cluster may store the full active set for the current pool cluster.
4. The passive set, on the other hand, represents the set where the miner (server 4) stores the blockchain of other clusters (subgroups 1, 2, 3) present in the network. Transactions that originate from other clusters are verified and the respective block is generated by active miners local to that cluster. However, the said miner in consideration would need access to the blockchain data of other clusters as well, as, say for example, the two clusters get merged at some point in the future, then all the miners of the two clusters would need access to the entire union blockchain data of the two clusters, as the future transactions originating from the union of the two clusters may refer back to transactions that originated from any of the two clusters. Therefore, once a block gets generated by any cluster, the block may be added to the active set of that cluster (by default, as the active set represents the working set of that cluster) as well as to other existing clusters. These other clusters will not verify the transactions of the block (as that has already been done by the originating cluster) nor will they take part in generating the block in the first place (as that again is the task of the originating active cluster). Rather they will add that block to their passive set according to the originating cluster.
5. With respect to the above-mentioned point, whenever an originating cluster sends its own newly mined blocks to a destination cluster (i.e., a different subgroup 1, 2, 3) to be stored within the latter's passive set, only the miners belonging to the leader set 41 of the destination cluster store the full blocks in their passive set. This is the functionality of the leader set, to store within its passive set the full blockchain of other clusters. The reason for having only the leader set storing the full blocks is to reduce the network traffic, since all miners (servers 4) have to receive the blocks, but a transmission of the complete blockchain might be too resource intensive on the network. Note that, in case of a large number of clusters and a high activity rate, frequency of block generation can be quite high. If all the miners of all clusters receive the full block from each other, a significant network bandwidth might be utilised in only block exchange. Having only the leader set store the passive blockchain therefore reduces network traffic and avoids latency during processing.
6. The working set miners 42 of the destination clusters (subgroups 1, 2, 3) may not receive the full blocks of the originating cluster, rather they get only the block metadata which is very small in size as compared to the full block. Only during union of two clusters, the working set servers 42 receive the full copy of the blockchain from its leader set 41. This may be required since all the miners (servers 4) should have access to the full blockchain corresponding to every device within the unionised cluster. Also, during union of two clusters, the leader set of each cluster may transfer the corresponding blockchain from within its passive set only, the active set will remain as it is. The working set nodes, which now may be fully functional miners of the merged cluster can verify the blocks that they receive from the leader set using the metadata that has previously been stored.
   Metadata may comprise only a limited amount of information. In particular, metadata may be used to save storage space while still maintaining the most important information. For example, metadata may comprise bare minimal information such as hash number of the blockchain or other additional parameters such as a time of block creation. In particular, metadata may comprise information that allow the server(s) to match and check during the merging operation that the block(s) being added during the merging operation is/are correct.
7. The process of division may be performed as follows. One cluster (subgroup 1, 2, 3) may be divided into two smaller clusters as described above, with each cluster forming its own leader set 41 and working set 42. All the miners (servers 4) in both clusters may maintain their active set for their currently active cluster. The leader set miners 41 may in addition store the full blocks of the other cluster(s) while the working set 42 stores only the metadata.
8. The process of union may be performed as follows. When two clusters (subgroups 1, 2, 3) merge to form a bigger cluster, the active sets of the two clusters also merge. For all forward transactions (i.e., transactions forward in time until the next merge/division event), the merged active set will act as the active set for the merged cluster. However, the merged cluster may have access to the blockchain of the previously separated clusters as well for all backward transactions (i.e., transactions backward in time). Therefore, each cluster may take into consideration the blockchain stored in its passive set corresponding to the other merged cluster, and it traces back along this chain up to the last division point that made that blockchain to split from its active set. This entire passive blockchain of the other cluster from the last division point right up to this current union point is appended parallelly to its active set, to serve together as the active set.
9. This provides a completely novel blockchain structure. Usually, blockchain is a linear data structure of connected blocks starting from the genesis block. However, by the proposed process of division and merging, it is possible to have a logically linear blockchain having parallel chain components in between. These parallel chains result from the process of division, whereby the active set of the blockchain divides into two chains corresponding to the divided clusters (subgroups 1, 2, 3). But, sometime in the future, when the two clusters again merge, their active sets may merge into one linear chain (for all forward transactions). Moreover, to maintain consistency for all backward transactions of both clusters, the respective active and passive chains (of the other cluster) are also considered now to be part of the unionised active chain. After a plurality of union and division events, the active chain of any cluster, starting from the genesis block, may consist of several parallel chains (between division and union points) but may logically be linear.
10. This division of the blockchain storage mechanism into active and passive sets by every miner (server 4) may ensure that every miner in the network, irrespective of the active cluster (subgroup 1, 2, 3) to which they are assigned to, stores the entire blockchain of its currently active cluster as well as of other clusters at all times. Thus, during the process of union and division, when the active working set of the blockchain changes for every miner, no additional latency may be induced by transferring the entire blockchain of the old cluster to the newly formed cluster. Otherwise, after every union and division, the miners would need to be updated by obtaining the entire blockchain of the new cluster from beginning. As blockchain are data intensive structures and miners are often distributed in large numbers across the network, this may entail a significant transfer latency. By having the active-passive set structure and storage mechanism, this transfer latency during dynamic resizing may be significantly reduced or eliminated as the miners would simply need to change their active and passive working sets.
11. A requirement of the servers may be that they have sufficient base storage to hold both the active and passive sets and the entire blockchain across all clusters of the network. The server infrastructure might thus be chosen accordingly.

A passive or preferably an active leader selection process may be adopted selecting a set of miners (servers 4) among all the miners in a pool to act as the leader set 41. The other miners from the pool not belonging to the leader set 41 may thus become part of the working set 42. For example, 10-40%, preferably 20 - 30% and more preferably 25% of the servers 4 of each subgroup of servers 1, 2, 3 may form part of the leader set 41. Only those miners whose available storage space exceeds a certain high threshold, and which may be computationally more powerful than the cluster average, may be elected to the leader set 41. The other miners may form part of the working set 42.

The amount of storage space requirements for a miner (server 4) to act as a leader may be a dynamically calculated variable based on the current networking conditions, transaction/activity rate, block size, etc. Each of the conditions may be assigned a proportionate weight based on its assumed importance and a weighted formula combining all the terms may provide a numerical value based on which a miner can be chosen as a leader. Every cluster (subgroup 1, 2, 3) may run its own leader selection algorithm based on its current parameters. The leader selection algorithm may also run within a cluster, when any miner belonging to the current leader set fails or reports bad parameters that makes it unable to continue as a member of the leader set. In that case, the leader selection is run once again to choose a new miner among the available nodes.

During execution of the proposed framework, the network may be divided into a number of subgroups 1, 2, 3 (clusters) with each cluster having its own leader set 41. Only the leader set members may exchange the complete blockchain of each other's cluster (to be kept within the passive set of every cluster) with themselves to reduce unnecessary network traffic.

During cluster division or cluster merging, when a new leader set is formed, an initial exchange between all the clusters may take place where the digital signatures of the miners (servers 4) of the new leader set may be shared with other leader set miners. Henceforth, each miner in a leader set may transfer a new block of its own (active) set to every other miner of all other leader sets along with its digital signature. The digital signature may help the other receiving miners from other leader sets to verify the message sent from this miner. Considering only two clusters, with respect to the leader set of the first cluster thereby, all the miners of the set receive the same block from all the miners of the second cluster and digitally verify its source miner. If the received block is the same across all the miners of the current set (which should be the case in case no transmission error or attack has happened), then all the miners of this leader set accept this block and add it to its respective passive set. The same process may be executed from the perspective of the second cluster as well as for other clusters.

In order to facilitate this entire dynamic blockchain framework with the division and union of miner pools (subgroups 1, 2, 3) and maintaining the leader sets 41 and working sets 42 of each cluster, a device 6 acting as a central coordinator may be provided. The device 6 can be a centrally located powerful computer comprising a processor 61 and a memory 62 configured to execute the respective functions of the central coordinator described herein.

The coordinator (device 6) may be responsible for run-time monitoring and analysis of all the framework parameters (asset parameters) including the transaction and activity rate with respect to geographic regions and taking decisions of when to initiate a division or union process and about the new size and structure of the miner clusters.

The coordinator may also be responsible for running the leader selection for each cluster (subgroups 1, 2, 3) and for enabling the leader set miners to exchange their digital signatures at every union and division event. The coordinator may further keep track of individual miner parameters, status and failure probability, and initiate a new division or union or leader selection algorithm in case it perceives some miner (server 4) to have failed. The central coordinator can employ techniques of Software Defined Networking (SDN) for this purpose.

According to embodiments, mobility and mobile nodes, both with respect to miner pool associations (allocation to a subgroup) and leader selection may be supported ("mobility support"). An example of mobile nodes that can also serve as miners (servers 4) themselves may be smart electric vehicles. These vehicles come equipped with sufficient processing, computing and storage power along with communication modules. Hence, in a smart grid framework, they may also be well adapted to serve as miners and leaders themselves, depending on their respective parameters. Being mobile, these special miners may be free to move around geographical regions. As they move about, they may often cross cluster (subgroup 1, 2, 3) boundaries to enter into neighbouring clusters. In this case, the neighbouring cluster pool (subgroup 1, 2, 3) may absorb this mobile node (server 4) as one of its own members. This process may be performed as follows.

The leaving cluster and the individual mobile node may perform a division operation (as described above) to have two clusters, the original leaving cluster minus the mobile node and another temporary cluster having the individual mobile node only. The sole mobile node may then perform a union operation with the joining cluster to have the joining cluster plus the newly added mobile node as one of its miner pool members. This process may be similar for all mobile nodes across all the clusters. The following lists a few non-exhaustive advantages of having mobility support as described above.
- In case a particular remote geographical region is not reporting high levels of transactions (exchange of asset parameters) and thereby it is not required to associate the region with a large miner pool (subgroup 1, 2, 3), some of whose members (miners/servers 4) might be far away from the region, few mobile miner nodes can be sent to that region to act as miners for that region, while the more powerful static miner servers in big cities can be assigned for other regions reporting high transaction rates.
- Being mobile, these miners are safe from potential hazards of being statically located, such as during a local storm or turbulence, they can move to a safer location without affecting the mining process.
- Having mobile nodes may be advantageous for dealing with sudden failure of static miner nodes. In any cluster if a node fails or reports some error, some mobile node can be quickly brought into that cluster to act as the substitute miner until some recovery mechanisms can be put in place. Mobile nodes can be used for dealing with sudden failures of both intra- and inter-cluster nodes.

Mobile nodes (servers 4) can also take part in the leader selection, just like normal nodes, based on their parameters and location. For example, a sufficiently powerful mobile node can be made to move closer towards a neighbouring cluster so that it can be put as a leader and being nearer to the neighbouring cluster. Such an inter-leader data transfer can proceed quite fast. In case inter-leader communication among neighbouring clusters is required to be of very low latencies, specifically the leader set of that cluster can be made to be formed with only mobile nodes from a reserve pool of mobile nodes, positioning them at appropriate locations.

Having mobility support through smart electric vehicles as servers 4 for example, however, may incur an additional support mechanism by the central coordinator. The vehicles run on battery power and they can continue to act as miners as long as their batteries are turned on. Different vehicles may have different battery and computational capacities. In case any mobile vehicle decides to join the miner pool as a mobile miner, it may synchronise with the network with respect to switching on or off its battery. For example, an electric bus currently serving as a leader as well as a miner within a cluster pool may not be able to suddenly turn off its battery or ignition thereby affecting the transaction verifications it was doing. Thus, the central coordinator (device 6) of the framework may have an additional support mechanism for handling mobile miners and different actions such as admitting a new mobile miner within the network or dealing with a mobile miner being turned off have to be coordinated by the controller. The controller may mandate some specific rules, such as directing a mobile vehicle to not switch off its batteries even though it may not be moving for some time in order to maintain the network consistency. Any individual mobile miner, in case it wants to join or leave the network or switch its batteries on or off may need to obtain permission from the controller first.

In addition to being able to dynamically resize the miner pool (subgroup 1, 2, 3) as per the activity rate, the present disclosure can also make the overall system fault tolerant with respect to sudden loss or failure of miner nodes (servers 4). For example, if the system currently has three working clusters A, B and C (subgroups 1, 2, 3), each having some miner nodes (servers 4) and one miner of cluster A fails (gets disconnected, gets switched off, etc.), cluster A may request both cluster B and C to lend one of the leader set 41 servers 4 to serve cluster A. Based on their own activity rates and latest transaction count, either B or C or both may be willing to allow one of its miners to join A. That miner may then join cluster A without any additional overhead as it would simply need to switch its active set to A and make the other sets its passive set. In a dynamic setting, this may provide a very efficient fault tolerant scheme.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according to embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

### Reference list

[1] https://medium.com/gochain/the-truth-about-bitcoin-and-ethereum-energy-consumption-20a325f39b52
[2] K. Kostal, P. Helebrandt, et.al, "Management and monitoring of loT Devices using Blockchain", Sensors 2019.
[3] S. Huh, S. Cho, S. Kim, "Managing loT Devices using Blockchain Platform", 19th International Conference on Advanced Communication Technology (ICACT), 2017.
[4] M. Son, H. Kim, "Blockchain-based secure firmware management system in loT environment", International Conference on Advanced Communications Technology (ICACT), 2019

### List of reference signs

- 1, 2, 3: Subgroup of servers / cluster
- 4: Server / miner
- 41: Leader set of servers
- 42: Working set of servers
- 5: Asset
- 6: Device
- 61: Processor
- 62: Memory

## Claims

1. Method of dynamic allocation of blockchain resources, the method comprising:
providing blockchain resources, wherein the blockchain resources comprise a plurality of servers connected to at least one asset;
dynamically determining a blockchain resource requirement of the at least one asset;
dynamically allocating a first number of servers of the plurality of servers to a first subgroup of servers based on the blockchain resource requirement.

2. Method according to claim 1, wherein the blockchain resource requirement is dependent on at least one of a frequency of storage of at least one asset parameter, a frequency of change of the at least one asset parameter, a data amount of the at least one asset parameter, or the first number of servers.

3. Method according to claim 2, wherein the at least one asset parameter includes at least one of a configuration, a location, a firmware, recording of operations/transactions, history of recordings of operations/transactions, or information derived from a blockchain of the at least one asset.

4. Method according to any one of claims 1 to 3, wherein the at least one asset is at least one of a solar cell, a capacitor bank, a wind turbines, an electric vehicle charging point, a smart house, an energy storage, a photovoltaic energy generation system, a smart meter, or an advanced metering infrastructure, wherein the at least one asset is preferably part of a smart grid.

5. Method according to any one of claims 1 to 4, wherein the dynamically allocating comprises increasing or decreasing the number of servers of the first subgroup of servers based on the blockchain resource requirement, and/or
wherein the dynamically allocating comprises dynamically allocating and/or reallocating servers of the plurality of servers to/from the first subgroup of servers based on the blockchain resource requirement.

6. Method according to any one of claims 1 to 5, wherein the dynamically allocating comprises allocating at least a second number of servers to at least a second subgroup of servers and/or dynamically changing the number of subgroups of servers.

7. Method according to any one of claims 5 or 6, wherein decreasing the number of servers of the first subgroup of servers comprises allocating a number of the first subgroup of servers to a second subgroup of servers, wherein a first blockchain of the first subgroup of servers is continued as a first single linear blockchain,
wherein preferably, each of the first and second subgroup of servers is configured to be allocated to a different asset and a second blockchain of the second subgroup of servers is continued as a second single linear blockchain.

8. Method according to any one of claims 5 to 7, wherein increasing the number of servers of the first subgroup of servers comprises merging a second subgroup of servers to the first subgroup of servers,
wherein merging of the first and second subgroup of servers comprises adding a second blockchain of the second subgroup of servers to a first blockchain of the first subgroup of servers in parallel as a new blockchain,
wherein the new blockchain is continued as a single linear blockchain,
wherein preferably, the new blockchain comprises a plurality of blockchains of other subgroups of servers in parallel to the first subgroup of servers.

9. Method according to any one of claims 1 to 8, further comprising:
storing a complete blockchain of the first subgroup of servers in an active set of each of the servers of the first subgroup of servers and storing a complete blockchain of other subgroups of servers in a passive set of each of the servers of the first subgroup of servers,
wherein preferably, the active set and passive set correspond to different storage spaces of a respective server.

10. Method according to claim 9, further comprising:
storing the complete blockchain of the first subgroup of servers in the active set of each server of the first subgroup of servers, and storing the complete blockchain of other subgroups of servers in the passive set of servers of the first subgroup of servers belonging to a leader set, and storing metadata of the blockchain of other subgroups of servers in the passive set of servers of the first subgroup of servers belonging to a working set.

11. Method according to any one of claims 1 to 10, wherein the method is executed by at least one of the plurality of servers or by a separate processing unit.

12. Device for blockchain resource allocation, wherein the device is connected to a plurality of servers connected to at least one asset, and
wherein the device comprises a processor configured to:
dynamically determine a blockchain resource requirement of the at least one asset;
dynamically allocate a first number of servers of the plurality of servers to a first subgroup of servers based on the blockchain resource requirement.

13. Device according to claim 12, wherein the processor is configured perform the method according to one of claims 1 to 11.

14. System for blockchain resource allocation, the system comprising:
a plurality of servers,
at least one asset connected to the plurality of servers,
a device according to any one of claims 12 or 13 connected to the plurality of servers.

15. System according to claim 14, wherein the at least one asset is at least one of a solar cell, a capacitor bank, a wind turbines, an electric vehicle charging point, a smart house, an energy storage, or a photovoltaic energy generation system, wherein the at least one asset is preferably part of a smart grid.
